# EUROPÄISCHE PATENTSCHRIFT

(11) **EP 0 963 889 B1**
(45) Veröffentlichungstag und Bekanntmachung des Hinweises auf die Patenterteilung: **04.08.2004**
(21) Anmeldenummer: 99110964.6
(22) Anmeldetag: 08.06.1999
(51) Int. Cl.: B60R 22/34, B60R 22/28

(54) **Gurtspule für einen Gurtaufroller eines Fahrzeuginsassen-Rückhaltesystems**
Belt spool for a vehicle occupant restraint system belt retractor
Bobine d'enroulement pour un rétracteur de sangle d'un système de retenue d'un occupant de véhicule

(30) Priorität: 08.06.1998 DE 29810223 U
(43) Veröffentlichungstag der Anmeldung: 15.12.1999
(73) Patentinhaber: TRW Automotive GmbH, 73553 Alfdorf (DE)
(72) Erfinder: Wier, Franz, 73571 Göggingen (DE)
(74) Vertreter: Sties, Jochen, Dipl.-Ing.

(56) Entgegenhaltungen:
- EP-A- 0 798 178
- US-A- 3 294 340
- US-A- 3 698 657
- US-A- 4 635 874

## Beschreibung

Die Erfindung betrifft eine Gurtspule für einen Gurtaufroller eines Fahrzeuginsassen-Rückhaltesytems, enthaltend einen zylindrischen Wickelkörper für ein Gurtband sowie mindestens einen Bund, der an einem axialen Ende des Wickelkörpers angeordnet ist, wobei der Wickelkörper aus mindestens einer Blechhülse besteht und der Bund durch eine Blechscheibe gebildet ist.

Die Gurtspule ist üblicherweise mit einer Aufwickelfeder verbunden, welche die Gurtspule in der Gurtband-Aufwickelrichtung beaufschlagt. Unter üblichen Betriebsumständen kann das Gurtband frei gegen die Kraft der Aufwickelfeder vom Gurtaufroller abgezogen werden. Wenn dagegen ein gurtband-sensitiver oder fahrzeug-sensitiver Sperrmechanismus aktiviert ist, wird die Gurtspule blockiert, so daß das Gurtband nicht weiter vom Gurtaufroller abgezogen werden kann. In diesem Zustand werden die bei einem eventuellen Unfall aus den auf einen Fahrzeuginsassen einwirkenden Verzögerungskräften resultierenden Zugkräfte im Gurtband über die Gurtspule und den Gurtaufroller in das Fahrzeug eingeleitet. Die Gurtspule muß daher so dimensioniert sein, daß sie den in diesem Fall auftretenden Kräften unter allen Umständen standhält. Gleichzeitig wird angestrebt, die Gurtspule so klein wie möglich zu dimensionieren, um die Kapazität zur Aufnahme des Gurtbandes zu steigern.

Im Stand der Technik sind bisher Gurtspulen bekannt, die entweder als Druckgußteil ausgebildet sind oder aus einer Stahlachse mit einer Kunststoffummantelung bestehen. Solche Konstruktionen sind jedoch sowohl unter Kosten- als auch unter Gewichtsaspekten nachteilig.

Aus der US-A-4,635,874 ist eine Gurtspule der eingangs genannten Art bekannt. Der Wickelkörper ist ein Blechsianzteil, auf dessen axiale Enden Scheiben aufgesteckt sind, die mit einer Verzahnung versehen sind. Der Wickelkörper ist mit den Scheiben verstemmt.

Die Erfindung hat daher zur Aufgabe, eine Gurtspule für einen Gurtaufroller zu schaffen, die deutlich kostengünstiger hergestellt werden kann und ein geringeres Gewicht aufweist.

Zu diesem Zweck ist bei einer Gurtspule der eingangs genannten Art vorgesehen, daß der Bund und der Wickelkörper einstückig miteinander ausgebildet sind. Trotz der Verwendung von Blech als Material für die Gurtspule läßt sich eine überraschend hohe Festigkeit erzielen, da die verwendeten Grundformen, also eine Hülse und eine Scheibe, bei den auf sie einwirkenden Belastungen eine sehr hohe Festigkeit haben. Somit ergibt sich trotz eines geringen Materialeinsatzes die erforderliche hohe Festigkeit bei sehr geringem Gewicht. Hinzu kommt, daß Blech vergleichsweise einfach bearbeitet bzw. umgeformt werden kann. Hieraus ergeben sich geringe Herstellungskosten. Bei der erfindungsgemäßen Gestaltung kann die Gurtspule, die vorzugsweise einen Bund an jedem axialen Ende aufweist, ausgehend von einem Rohrabschnitt hergestellt werden, dessen axiale Enden derart aufgeweitet werden, daß sie schließlich jeweils einen Bund am axialen Ende der Gurtspule bilden. Der Wickelkörper wird gebildet durch den nicht umgeformten Abschnitt zwischen den beiden axialen Enden des Rohrabschnittes. Da alle Teile einstückig miteinander ausgeführt sind, ergibt sich eine besonders hohe Festigkeit, während gleichzeitig lediglich ein kostengünstiger Umformschritt zum Herstellen der Gurtspule verwendet wird.

Gemäß einer bevorzugten Ausführungsform ist vorgesehen, daß der Wickelkörper aus zwei ineinandergeschobenen Blechhülsen besteht. Jede der Blechhülsen ist an einem ihrer axialen Enden mit dem Bund versehen, der beispielsweise durch Umformen eines axialen Endes eines Rohrabschnittes hergestellt wurde. Da der Wickelkörper aus zwei Blechhülsen besteht, weist er eine noch größere Festigkeit auf. Wenn zusätzlich, wie dies gemäß einer weiteren bevorzugten Ausführungsform vorgesehen ist, mindestens die äußere der beiden Blechhülsen einen Schlitz für den Durchtritt des Gurtbandes aufweist, kann das Gurtband in einfacher Weise zwischen den beiden Blechhülsen eingespannt werden. Dies minimiert den Aufwand für eine zuverlässige Festlegung des Gurtbandes an der Gurtspule.

Vorteilhafte Ausgestaltungen der Erfindung ergeben sich aus den Unteransprüchen.

Die Erfindung wird nachfolgend unter Bezugnahme auf verschiedene Ausführungsformen beschrieben, die in den beigefügten Zeichnungen dargestellt sind. In diesen zeigen:
- Figur 1 eine perspektivische Ansicht einer Gurtspule gemäß einer ersten Ausführungsform der Erfindung;
- Figur 2 eine Seitenansicht der Gurtspule von Figur 1;
- die Figuren 3 bis 6 verschiedene Schritte bei der Herstellung der Gurtspule der Figuren 1 und 2;
- Figur 7 einen Querschnitt durch ein Ende einer Gurtspule gemäß einer ersten Variante der ersten Ausführungsform;
- Figur 8 einen Querschnitt entlang der Ebene VIII-VIII von Figur 7;
- Figur 9 einen Querschnitt durch eine Gurtspule gemäß einer zweiten Variante der ersten Ausführungsform;
- Figur 10 eine abgebrochene Ansicht eines Schnitts entlang der Ebene X-X von Figur 9;
- Figur 11 einen Längsschnitt durch eine Gurtspule gemäß einer dritten Variante der ersten Ausführungsform;
- Figur 12 einen schematischen Längsschnitt durch eine Gurtspule gemäß einer zweiten Ausführungsform der Erfindung;
- Figur 13 einen Querschnitt durch eine Gurtspule gemäß einer ersten Variante der zweiten Ausführungsform;
- Figur 14 einen Querschnitt durch eine Gurtspule gemäß einer zweiten Variante der zweiten Ausführungsform.
- Figur 15 einen Längsschnitt durch eine Gurtspule gemäß einer dritten Ausführungsform;
- Figur 16 einen Längsschnitt durch eine Gurtspule gemäß einer Variante zur in Figur 15 gezeigten dritten Ausführungsform;
- Figur 17 in einer Seitenansicht die Gurtspule von Figur 15;
- Figur 18 in einer Vorderansicht die Gurtspule von Figur 15; und
- Figur 19 in einer Rückansicht die Gurtspule von Figur 15.

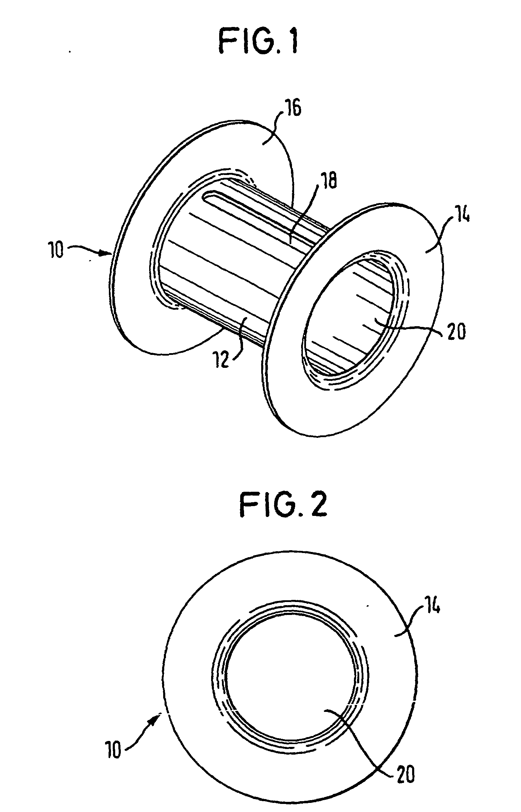

In den Figuren 1 und 2 ist eine Gurtspule 10 gemäß einer ersten Ausführungsform der Erfindung gezeigt. Diese besteht aus einem zylindrischen Wickelkörper 12, der zur Aufnahme eines Gurtbandes vorgesehen ist, und aus einem Bund 14, 16 an jedem axialen Ende des Wickelkörpers. Jeder Bund dient zur Führung des Gurtbandwickels auf dem Wickelkörper 12. Der hülsenförmige Wickelkörper 12 sowie der Bund 14 und der Bund 16 sind einstückig miteinander aus Blech gebildet. Der Wickelkörper 12 ist mit einem sich in axialer Richtung erstreckenden Schlitz versehen, durch den hindurch das Gurtband in den vom Wickelkörper abgegrenzten Innenraum 20 hinein eintreten kann, um dort befestigt zu werden.

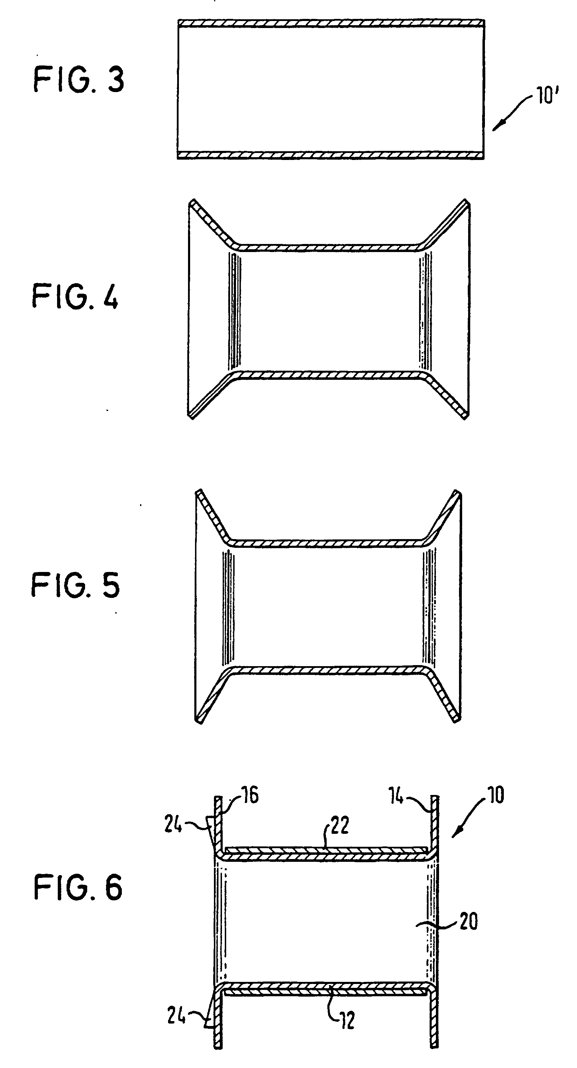

In den Figuren 3 bis 6 sind schematisch verschiedene Schritte der Herstellung der in den Figuren 1 und 2 gezeigten Gurtspule dargestellt. Die Gurtspule 10 wird hergestellt ausgehend von einem Rohrabschnitt 10' aus Blech, der eine Länge von beispielsweise 76 mm und einen Außendurchmesser von 32,6 mm hat, wobei die Wandstärke etwa 1,2 mm beträgt.

Ausgehend von dem in Figur 3 gezeigten Ausgangszustand werden die axialen Enden des Rohrabschnittes 10' aufgeweitet und umgebogen, so daß über die in den Figuren 4 und 5 gezeigten Zwischenstadien die in Figur 6 gezeigte Gurtspule 10 erhalten wird. Auf dem Wickelkörper 12 ist ein Gurtbandwickel 22 angedeutet. Der Bund 16 ist mit einer Sperrverzahnung versehen, die durch aus der von dem Bund 16 definierten Ebene herausgestellte Sperrnasen 24 gebildet ist. Diese Sperrnasen 24 dienen dazu, im Bedarfsfall die Gurtspule drehfest im Gurtaufroller zu verriegeln.

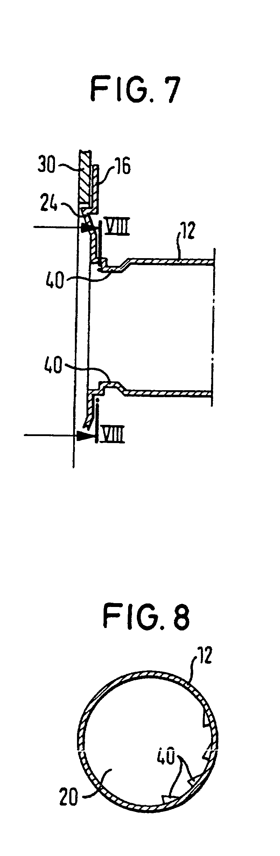

In den Figuren 7 und 8 ist eine erste Variante der in Figur 6 gezeigten Gurtspule dargestellt. Auch hier sind im Bund 16 die Sperrnasen 24 vorgesehen, die zur Blockierung der Gurtspule dienen. Der mit der erfindungsgemäßen Gurtspule versehene Gurtaufroller kann beispielsweise so ausgebildet sein, daß ein Seitenschenkel 30 seines Rahmens, in welchem die Gurtspule drehbar gelagert ist, mit einer Öffnung versehen ist, welche die von den Sperrnasen 24 gebildete Sperrverzahnung umschließt und die ihrerseits an ihrem Rand mit einer Verzahnung versehen ist. Zum Blockieren der Gurtspule 10 wird diese aus ihrer Ruhestellung, in der sich die von den Sperrnasen 24 gebildete Sperrverzahnung frei im Gehäuseschenkel drehen kann, in eine Stellung in Anlage an der Verzahnung des Gehäuseschenkels 30 verlagert. Eine solche Gestaltung ist im Stand der Technik als Hubrollen-Automat bekannt.

Die Verlagerung der Gurtspule zum Zwecke des Blockierens kann eingeleitet werden mittels eines an sich bekannten Sperrmechanismus, der hier mit einer Vorsteuerverzahnung zusammenwirken kann, die durch Nasen 40 auf der Innenseite des Wickelkörpers 12 gebildet ist. Diese Vorsteuerverzahnung kann mit vergleichsweise geringem Aufwand gebildet werden, indem die Wandung der den Wickelkörper 12 bildenden Blechhülse zum Innenraum 20 hin eingedrückt wird.

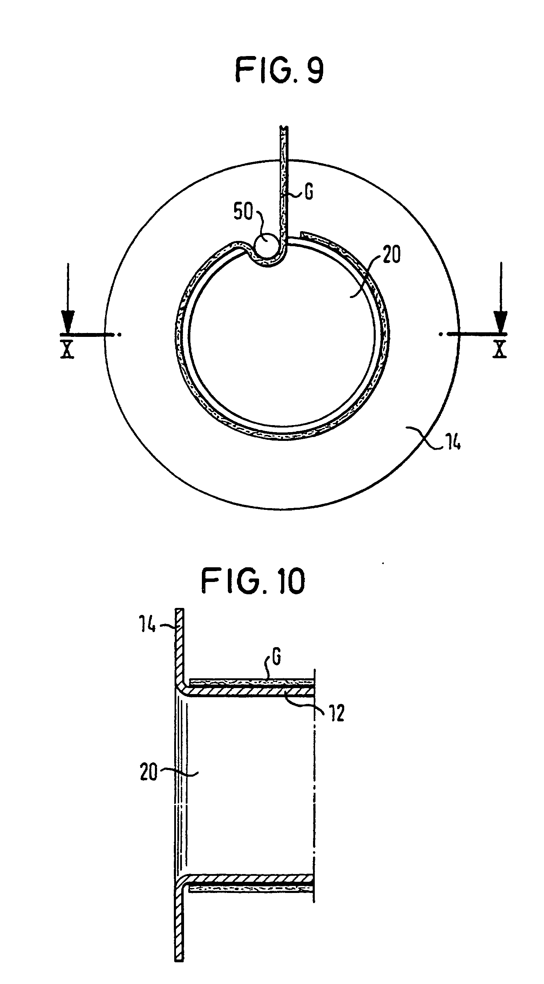

In den Figuren 9 und 10 ist eine zweite Variante einer Gurtspule gemäß der ersten Ausführungsform gezeigt. Bei dieser Ausführungsform ist die Außenfläche des Wickelkörpers als Klebefläche ausgebildet, auf der das Ende des Gurtbandes festgeklebt ist. Um zu gewährleisten, daß auch bei vollständig von der Gurtspule abgezogenem Gurtband auf die Klebefläche nur Scherkräfte und keine Zugkräfte übertragen werden können, ist ein Umlenkelement 50 vorgesehen, welches vom Gurtband auf der dem Innenraum 20 zugewandten Seite des Umlenkelementes umschlungen wird. Das Gurtband G verläuft also von außen kommend zuerst unter dem Umlenkelement 50 hindurch und anschließend auf der Außenseite des Wickelkörpers 12.

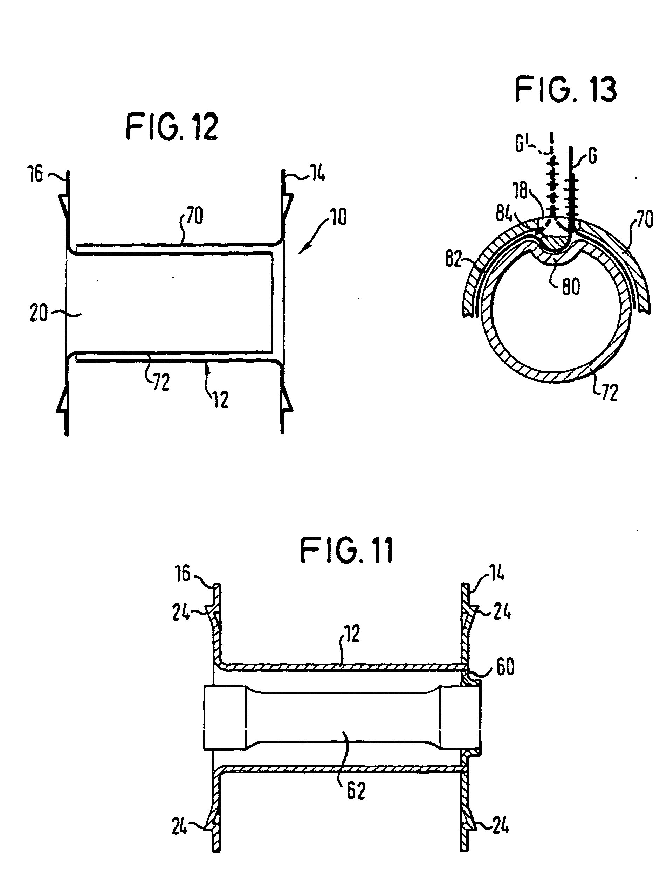

In Figur 11 ist eine dritte Variante einer Gurtspule gemäß der ersten Ausführungsform gezeigt. Bei dieser Ausführungsform ist der Wickelkörper 12 einstückig mit dem Bund 16 ausgebildet, der auch hier mit den Sperrnasen 24 versehen ist. Der Bund 14 ist gebildet durch eine separate Blechscheibe, die auf das bezüglich Figur 11 rechte Ende des Wickelkörpers 12 aufgebracht ist. Bei dieser Variante ist auch der Bund 14 mit den Sperrnasen 24 versehen. Der Bund 14 ist außerdem mit einem Lagerabschnitt 60 versehen, der innerhalb des von dem Wickelkörper definierten Zylinders liegt. Der Lagerabschnitt 60 weist eine Mittelöffnung auf, in die ein axiales Ende eines Torsionsstabes 62 eingreift. Dieses Ende des Torsionsstabes kann in beliebiger Weise drehfest mit dem Lagerabschnitt 60 des Bundes 14 verbunden sein. Der Torsionsstab dient in an sich bekannter Weise dazu, eine kontrollierte Drehung der Gurtspule 10 in der Gurtband-Abwickelrichtung zu ermöglichen, um durch kontrollierten Gurtbandabzug vom Gurtaufroller Spitzenlasten im Sicherheitsgurtsystem zu vermeiden. Bei dieser Weiterbildung kann das Gurtband beispielsweise an seinem Ende mit einer Schlaufe versehen sein, durch die hindurch sich der Torsionsstab 62 erstreckt. In diesem Fall ist ein axialer Schlitz im Wickelkörper 12 vorgesehen, wie er aus Figur 1 bekannt ist.

In Figur 12 ist eine Gurtspule 10 gemäß einer zweiten Ausführungsform gezeigt. Bei dieser Ausführungsform besteht der Wickelkörper 12 aus zwei ineinandergeschobenen Blechhülsen 70, 72, die jeweils mit einem Bund 14 bzw. 16 versehen sind, wie er aus der ersten Ausführungsform bekannt ist. Obwohl in Figur 12 zur Verdeutlichung ein großer Abstand zwischen den Blechhülsen 70, 72 gezeichnet ist, ist in der Praxis der Innendurchmesser der Blechhülse 70 derart an den Außendurchmesser der Blechhülse 72 angepaßt, daß die beiden Hülsen fest aufeinandersitzen. Auf diese Weise ergibt sich eine hohe Festigkeit der Gurtspule 10.

In Figur 13 ist eine erste Variante der Gurtspule gemäß der zweiten Ausführungsform gezeigt. Bei dieser Ausführungsform ist die innere Blechhülse 72 mit einer axialen Nut 80 versehen, während in der äußeren Blechhülse 70 der bekannte axiale Schlitz 18 angeordnet ist. Das Gurtband G ist mit einer beispielsweise genähten Schlaufe 82 versehen, die zunächst über die innere Blechhülse 72 geschoben wird. In diesem Zustand hat das Gurtband G den in Figur 13 mit G' gezeigten Verlauf. Anschließend wird ein Fixierstab 84 in die Nut 80 eingelegt, und es wird die äußere Blechhülse 70 über die innere Blechhülse 72 geschoben. Dabei wird aufgrund der Dimensionierung der beiden Blechhülsen 70, 72 relativ zueinander das Gurtband zwischen den beiden Blechhülsen und dem Fixierstab 84 eingespannt, so daß es den in Figur 13 mit G bezeichneten Verlauf hat.

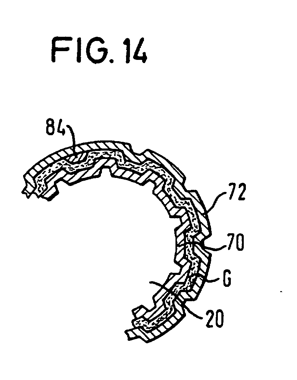

In Figur 14 ist eine zweite Variante einer Gurtspule gemäß der zweiten Ausführungsform gezeigt. Bei dieser Ausführungsform sind die äußere Blechhülse 72 und die innere Blechhülse 70 mit einem im Querschnitt gesehen gewellten Profil ausgebildet, und sie sind so ineinandergeschoben, daß sich zwischen Ihnen das Gurtband erstreckt. Zusätzlich wird der Fixierstab 84 verwendet, um an einer präzise definierten Stelle eine Klemmkraft auf das Gurtband G bereitzustellen, damit dieses sicher und zuverlässig zwischen der inneren und der äußeren Blechhülse gehalten wird.

Allen Ausführungsformen der erfindungsgemäßen Gurtspule ist gemeinsam, daß im Innenraum 20 des Wickelkörpers ein im Vergleich zum Stand der Technik besonders großer Bauraum zur Verfügung steht, da die Gesamt-Wandstärke des Wickelkörpers auch bei einer Ausgestaltung mit zwei ineinandergeschobenenen Blechhülsen vergleichsweise gering ist. Dieser Bauraum kann zur Aufnahme von Funktionsteilen eines Gurtaufrollers verwendet werden, beispielsweise für ein Kindersicherungs-System oder auch einen Sensor mit einer Sperrklinke, der in die Vorsteuerverzahnung im Inneren des Wickelkörpers eingreift.

Zur Lagerung der Gurtspule kann ein Kunststoffteil verwendet werden, das in die Gurtspule eingesetzt wird und an dem ein Lagerzapfen ausgebildet ist oder angreift.

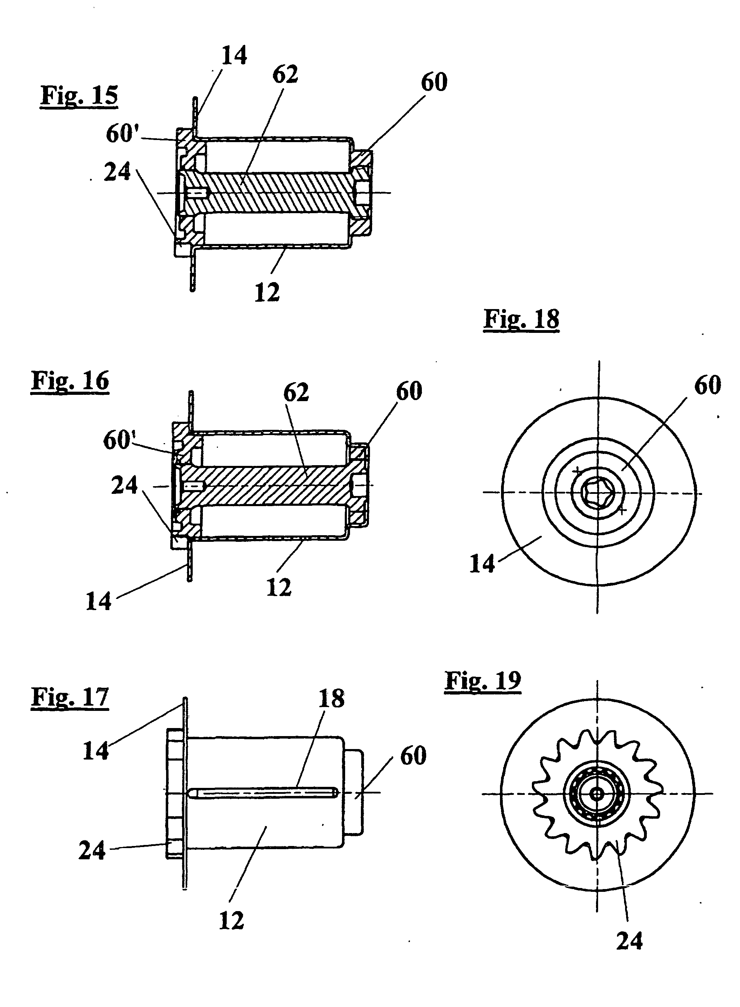

In den Figuren 15 sowie 17 bis 19 ist eine Gurtspule gemäß einer dritten Ausführungsform der Erfindung gezeigt. Auch bei dieser Ausführungsform ist im Inneren der Gurtspule ein Torsionsstab 62 angeordnet. Dieser ist an dem bezüglich Figur 15 rechten Ende an einem Lagerabschnitt 62 drehfest angebracht. Dieser Lagerabschnitt sowie der Bund 14 sind einstückig mit dem Wickelkörper 12 ausgebildet.

An seinem bezüglich Figur 15 linken Ende ist der Torsionsstab 62 drehfest mit der Sperrverzahnung 24 verbunden, die hier an einem separaten Bauteil 60' ausgebildet ist, das als Sperrscheibe und als Lagerabschnitt dient. Der Torsionsstab ermöglicht eine Relativdrehung zwischen dem Wickelkörper 12 und der Sperrverzahnung 24, so daß eine Kraftbegrenzungsfunktion möglich ist, wenn die Sperrverzahnung 24 blockiert ist.

In Figur 17 ist ein Schlitz 18 zu sehen, durch den hindurch das Gurtband in das Innere der Gurtspule geführt werden kann, um dort befestigt zu werden. Beispielsweise kann am Ende des Gurtbandes eine Schlaufe angenäht sein, die über den Torsionsstab 62 gestülpt wird.

In Figur 16 ist eine Variante zu der in den Figuren 15 sowie 17 bis 19 gezeigten Ausführungsform dargestellt. Der Unterschied besteht darin, daß der Lagerabschnitt 60, an dem das bezüglich Figur 16 rechte Ende des Torsionsstabes drehfest angebracht ist, als separates Bauteil ausgeführt ist, das in einem gestuft und einstückig mit dem Wickelkörper 12 ausgebildeten Aufnahmeabschnitt angebracht ist. Auch bei dieser Ausführungsform ist eine Kraftbegrenzungsfunktion möglich, da die Gurtspule relativ zur Sperrverzahnung 24 verdrehbar ist.

## Patentansprüche

1. Gurtspule für einen Gurtaufroller eines Fahrzeuginsassen-Rückhaltesystems, enthaltend einen zylindrischen Wickelkörper (12) für ein Gurtband (G) sowie mindestens einen Bund (14, 16), der an einem axialen Ende des Wickelkörpers (12) angeordnet ist, wobei der Wickelkörper (12) aus mindestens einer Blechhülse (12; 70, 72) besteht und der Bund (14, 16) durch eine Blechscheibe gebildet ist, **dadurch gekennzeichnet, daß** der Bund (14, 16) und der Wickelkörper (12) einstückig miteinander ausgebildet sind.

2. Gurtspule nach Anspruch 1, **dadurch gekennzeichnet, daß** ein Bund (14, 16) an jedem axialen Ende des Wickelkörpers (12) ausgebildet ist.

3. Gurtspule nach Anspruch 1, **dadurch gekennzeichnet, daß** der Bund (14, 16) durch Aufweiten eines axialen Endabschnittes eines Rohrabschnittes (10') gebildet ist, dessen nicht aufgeweiteter Abschnitt den Wickelkörper (12) bildet.

4. Gurtspule nach Anspruch 2, **dadurch gekennzeichnet, daß** der Bund (14) auf den Wickelkörper aufgesteckt ist.

5. Gurtspule nach einem der vorhergehenden Ansprüche, **dadurch gekennzeichnet, daß** der Bund (14) mit einem Lagerabschnitt (60) versehen ist, der innerhalb des von dem Wickelkörper (12) definierten Zylinders liegt.

6. Gurtspule nach Anspruch 5, **dadurch gekennzeichnet, daß** im Inneren (20) des Wickelkörpers (12) ein Torsionsstab (62) angeordnet ist, der durch eines seiner axialen Enden mit dem Lagerabschnitt (60) verbunden ist.

7. Gurtspule nach einem der vorhergehenden Ansprüche, **dadurch gekennzeichnet, daß** der Bund (14, 16) mit einer Sperrverzahnung versehen ist, die durch aus der von dem Bund (14, 16) definierten Ebene herausgestellte Sperrnasen (24) gebildet ist.

8. Gurtspule nach einem der vorhergehenden Ansprüche, **dadurch gekennzeichnet, daß** im Inneren des Wickelkörpers (12) eine Vorsteuer-Verzahnung (40) ausgebildet ist.

9. Gurtspule nach Anspruch 8, **dadurch gekennzeichnet, daß** die Vorsteuerverzahnung durch Nasen (40) auf der Innenseite der Blechhülse (12) gebildet ist.

10. Gurtspule nach einem der vorhergehenden Ansprüche, **dadurch gekennzeichnet, daß** der Wickelkörper (12) aus zwei ineinandergeschobenen Blechhülsen (70, 72) besteht.

11. Gurtspule nach einem der vorhergehenden Ansprüche, **dadurch gekennzeichnet, daß** mindestens eine Blechhülse (12; 70, 72) einen Schlitz (18) für den Durchtritt des Gurtbandes (G) aufweist.

12. Gurtspule nach Anspruch 10 oder 11, **dadurch gekennzeichnet, daß** die beiden Blechhülsen (70, 72) im Querschnitt ein gewelltes Profil aufweisen, wobei die beiden Profile derart aneinander angepaßt sind, daß die beiden Blechhülsen (70, 72) verdrehsicher aufeinander angeordnet sind.

13. Gurtspule nach Anspruch 10 oder 11, **dadurch gekennzeichnet, daß** die beiden Blechhülsen (70, 72) jeweils ein rundes Profil aufweisen, wobei die innere Blechhülse eine axiale Nut (80) aufweist, die gegenüber dem Schlitz (18) für den Durchtritt des Gurtbandes (G) angeordnet ist.

14. Gurtspule nach Anspruch 13, **dadurch gekennzeichnet, daß** in der Nut (80) ein Fixierstab (84) angeordnet ist, der die beiden Blechhülsen (70, 72) gegeneinander verspannt.

15. Gurtspule nach einem der Ansprüche 10 bis 14, **dadurch gekennzeichnet, daß** zwischen den beiden Blechhülsen (70, 72) das Gurtband (G) angeordnet ist.

16. Gurtspule nach einem der vorhergehenden Ansprüche, **dadurch gekennzeichnet, daß** eine Klebefläche vorgesehen ist, auf die das Gurtband (G) aufgeklebt werden kann, und daß ein Umlenkelement (50) vorgesehen ist, das so angeordnet ist, daß das mit der Klebefläche verklebte Gurtband (G) ausgehend von dieser das Umlenkelement (50) auf seiner der Mittelachse der Gurtspule (10) zugewandten Seite umschlingt und erst dann in radialer Richtung von der Gurtspule (10) weggeführt werden kann.

17. Gurtspule nach Anspruch 10, **dadurch gekennzeichnet, daß** die beiden Blechhülsen miteinander verklebt sind.

18. Gurtspule nach Anspruch 10 und Anspruch 16, **dadurch gekennzeichnet, daß** die beiden Blechhülsen miteinander und mit dem Gurtband verklebt sind.

## Claims

1. A belt reel for a belt retractor of a vehicle occupant restraint system, comprising a cylindrical spool (12) for a belt webbing (G) as well as at least one collar (14, 16) arranged at an axial end of the spool (12), the spool (12) consisting of at least one sheet-metal sleeve (12; 70, 72) and the collar (14, 16) being formed by a sheet-metal disk, **characterized in that** the collar (14, 16) and the spool (12) are configured integrally with each other.

2. The belt reel as set forth in claim 1, **characterized in that** a collar (14, 16) is configured at each axial end of the spool (12).

3. The belt reel as set forth in claim 1, **characterized in that** the collar (14, 16) is formed by widening an axial end section of a tube section (10'), the non-widened section of which forms the spool (12).

4. The belt reel as set forth in claim 2, **characterized in that** the collar (14) is slipped on the spool.

5. The belt reel as set forth in any of the preceding claims, **characterized in that** the collar (14) is provided with a bearing section (60) located within the cylinder defined by the spool (12).

6. The belt reel as set forth in claim 5, **characterized in that** in the interior (20) of the spool (12) a torsion bar (62) is arranged, which is connected by one of its axial ends to the bearing section (60).

7. The belt reel as set forth in any of the preceding claims, **characterized in that** the collar (14, 16) is provided with a locking toothing formed by locking detents (24) protruding from the plane defined by the collar (14, 16).

8. The belt reel as set forth in any of the preceding claims, **characterized in that** a pilot toothing (40) is configured in the interior of the spool (12).

9. The belt reel as set forth in claim 8, **characterized in that** the pilot toothing is formed by detents (40) on the inner side of the sheet-metal sleeve (12).

10. The belt reel as set forth in any of the preceding claims, **characterized in that** the spool (12) consists of two telescoped sheet-metal sleeves (70, 72).

11. The belt reel as set forth in any of the preceding claims, **characterized in that** at least one sheet-metal sleeve (12; 70, 72) has a slot (18) for the passage of the belt webbing (G).

12. The belt reel as set forth in claim 10 or 11, **characterized in that** the two sheet-metal sleeves (70, 72) have, in cross-section, a corrugated profile, the two profiles being adapted to each other such that the two sheet-metal sleeves (70, 72) are arranged on each other so as to be locked against rotation.

13. The belt reel as set forth in claim 10 or 11, **characterized in that** each of the two sheet-metal sleeves (70, 72) has a round profile, the inner sheet-metal sleeve including an axial groove (80) arranged opposite the slot (18) for the passage of the belt webbing (G).

14. The belt reel as set forth in claim 13, **characterized in that** a locating bar (84) is arranged in the groove (80), the locating bar tensioning the two sheet-metal sleeves (70, 72) relative to each other.

15. The belt reel as set forth in any of claims 10 to 14, **characterized in that** the belt webbing (G) is arranged between the two sheet-metal sleeves (70, 72).

16. The belt reel as set forth in any of the preceding claims, **characterized in that** a bonding area is provided onto which the belt webbing (G) can be bonded, and that a deflection element (50) is provided which is arranged such that the belt webbing (G) bonded to the bonding area, starting from the bonding area, loops around the deflection element (50) on the side thereof facing the centerline of the belt reel (10) before then being able to be guided away from the belt reel (10) in the radial direction.

17. The belt reel as set forth in claim 10, **characterized in that** the two sheet-metal sleeves are bonded to each other.

18. The belt reel as set forth in claim 10 and claim 16, **characterized in that** the two sheet-metal sleeves are bonded to each other and to the belt webbing.

## Revendications

1. Bobine de ceinture pour un enrouleur de ceinture d'un système de retenue d'occupants d'un véhicule, comportant un corps d'enroulement (12) cylindrique pour une sangle de ceinture (G) ainsi qu'au moins une collerette (14, 16) qui est agencée à une extrémité axiale du corps d'enroulement (12), le corps d'enroulement étant constitué par au moins un manchon en tôle (12 ; 70 ; 72) et la collerette (14, 16) étant formée par un disque en tôle, **caractérisée en ce que** la collerette (14, 16) et le corps d'enroulement (12) sont réalisés d'un seul tenant l'un avec l'autre.

2. Bobine de ceinture selon la revendication 1, **caractérisée en ce qu'**une collerette (14, 16) est réalisée à chaque extrémité axiale du corps d'enroulement (12).

3. Bobine de ceinture selon la revendication 1, **caractérisée en ce que** la collerette (14, 16) est formée par élargissement d'un tronçon d'extrémité axial d'un tronçon tubulaire (10'), dont le tronçon non élargi forme le corps d'enroulement (12).

4. Bobine de ceinture selon la revendication 2, **caractérisée en ce que** la collerette (14) est placée sur le corps d'enroulement.

5. Bobine de ceinture selon l'une des revendications précédentes, **caractérisée en ce que** la collerette (14) est pourvue d'un tronçon de palier (60) qui est situé à l'intérieur du cylindre défini par le corps d'enroulement (12).

6. Bobine de ceinture selon la revendication 5, **caractérisée en ce qu'**à l'intérieur du corps d'enroulement (12) est agencée une barre de torsion (62) qui est reliée par une de ses extrémités axiales avec le tronçon de palier (60).

7. Bobine de ceinture selon l'une des revendications précédentes, **caractérisée en ce que** la collerette (14, 16) est pourvue d'une denture de blocage qui est formée par des ergots de blocage (24) faisant saillie hors du plan défini par la collerette (14, 16).

8. Bobine de ceinture selon l'une des revendications précédentes, **caractérisée en ce qu'**une denture pilote est réalisée à l'intérieur du corps d'enroulement (12).

9. Bobine de ceinture selon la revendication 8, **caractérisée en ce que** la denture pilote est formée par des ergots (40) sur la face intérieure du manchon en tôle (12) ;

10. Bobine de ceinture selon l'une des revendications précédentes, **caractérisée en ce que** le corps d'enroulement (12) est constitué par deux manchons en tôle (70, 72) emboîtés l'un dans l'autre.

11. Bobine de ceinture selon l'une des revendications précédentes, **caractérisée en ce qu'**au moins un manchon en tôle (12 ; 70, 72) présente une fente (18) pour le passage de la sangle de ceinture (G).

12. Bobine de ceinture selon la revendication 10 ou 11, **caractérisée en ce que** les deux manchons en tôle (70, 72) présentent en section transversale un profil ondulé, les deux profils étant adaptés l'un à l'autre de telle sorte que les deux manchons en tôle (70, 72) sont agencés l'un sur l'autre de manière antirotative.

13. Bobine de ceinture selon la revendication 10 ou 11, **caractérisée en ce que** les deux manchons en tôle (70, 72) présentent chacun un profil rond, le manchon en tôle intérieur présentant une gorge (80) axiale qui est agencée à l'opposé de la fente (18) pour le passage de la sangle de ceinture (G).

14. Bobine de ceinture selon la revendication 13, **caractérisée en ce que** dans la gorge (80) est agencée une barre de fixation (84) qui serre les deux manchons en tôle (70, 72) l'un contre l'autre.

15. Bobine de ceinture selon l'une des revendications 10 à 14, **caractérisée en ce que** la sangle de ceinture (G) est agencée entre les deux manchons en tôle (70, 72).

16. Bobine de ceinture selon l'une des revendications précédentes, **caractérisée en ce qu'**il est prévu une surface adhésive sur laquelle peut être collée la sangle de ceinture (G), et **en ce qu'**il est prévu un élément de déflexion (50) qui est agencé de telle sorte que la sangle de ceinture (G) collée avec la surface adhésive, partant de cette surface, enserre l'élément de déflexion (50) sur son côté tourné vers l'axe médian de la bobine de ceinture (10) avant de pouvoir être guidée en éloignement de la bobine de ceinture (10) en direction radiale.

17. Bobine de ceinture selon la revendication 10, **caractérisée en ce que** les deux manchons en tôle sont collés l'un à l'autre.

18. Bobine de ceinture selon la revendication 10 et la revendication 16, **caractérisée en ce que** les deux manchons en tôle sont collés l'un à l'autre et à la sangle de ceinture.
